# EUROPEAN PATENT APPLICATION

(11) **EP 1 518 943 A1**
(43) Date of publication of application: **30.03.2005**
(21) Application number: 03738527.5
(22) Date of filing: 27.06.2003
(51) Int. Cl.: C23C 22/07, C23C 22/53

(54) **SURFACE-TREATED ZINC BASED METAL PLATED STEEL PLATE AND METHOD FOR PRODUCTION THEREOF**

(30) Priority: 28.06.2002 JP 2002189140; 28.01.2003 JP 2002018460
(71) Applicant: JFE Steel Corporation, Tokyo, 100-0011 (JP)
(72) Inventor: HIGAI, Kazuhiko c/o JFE STEEL CORPRATION, Chiyoda-ku, Tokyo 100-0011 (JP); SHIMIZU, Tomoyuki c/o JFE STEEL CORPORATION, Chiyoda-ku, Tokyo 100-0011 (JP); KYOUNO, Kazuaki c/o JFE STEEL CORPRORATION, Chiyoda-ku, Tokyo 100-0011 (JP)
(74) Representative: Grünecker, Kinkeldey, Stockmair & Schwanhäusser Anwaltssozietät
(86) International application number: PCT/JP2003/008152
(87) International publication number: WO 2004/003253

(57) **Abstract**

The application provides a surface-treated zinc series plated steel sheet containing a steel sheet having on a surface thereof a zinc series plated layer, and on the plated layer, a surface-treated film containing a reaction product of a metallic salt with the plated metal, and a resin in a mass proportion of from 1 to 50% by mass with respect to the metallic salt, wherein the surface-treated film has a layer mainly containing the reaction product having a thickness of from 0.02 to 3 µm, and the layer mainly containing the reaction product contains 20% by volume or more of the resin contained in the surface-treated film, and a process for producing the same. According to the invention, such a chromium free surface-treated zinc series plated steel sheet is obtained that is excellent in corrosion resistance of flat part, corrosion resistance after forming, electroconductivity and formability, as equivalent to a general-purpose chromate-treated zinc series plated steel sheet. According to the process of the invention, neither chromium nor chromium compound is used, and no special wastewater treatment is necessary in a coating process of a surface treating solution and upon using the surface-treated steel sheet thus obtained.

## Description

### TECHNICAL FIELD

The present invention relates to a surface-treated zinc series plated steel sheet, and a process for producing the same. In particular, it relates to such a surface-treated zinc series plated steel sheet that is produced by using a surface treating solution containing neither chromium nor a chromium compound and has excellent corrosion resistance, electroconductivity and formability equivalent to a chromate-treated steel sheet, and to a process for producing the same.

### BACKGROUND ART

A zinc series plated steel sheet is widely utilized in building materials, automobiles, home electric appliances and the like. In particular, a surface-treated steel sheet formed by subjecting a zinc plated steel sheet to a chromate treatment for improving corrosion resistance has been widely used in automobiles, home electric appliances, duplicators, and motor products used inside them, which are required to have corrosion resistance. Chromate has such an effect that corrosion resistance of a zinc plated steel sheet is improved by the self-repairing function thereof. However, it is necessary to employ a special wastewater treatment defined by the Clean Water Act for carrying out the chromate treatment, which becomes a factor of increase of the production cost. Accordingly, in order to prevent formation of rust of a steel sheet, particularly white rust of a zinc series plated steel sheet, a surface treating technique using no chromium is demanded.

Furthermore, in recent years, a surface-treated steel sheet that contains no chromium, has corrosion resistance and further is low in surface electric resistance is demanded in business equipments, such as personal computers, duplicators and the like, home electric appliances, such as air conditioners and the like, and parts, such as a motor and the like, used therein. This is because a steel sheet having a low surface electric resistance, i.e., a steel sheet good in electroconductivity, has such an effect that prevents leakage of noise due to electromagnetic waves. Therefore, it is important in the purposes that both the corrosion resistance and the electroconductivity are simultaneously realized.

From the standpoint, many surface treating techniques using neither chromium nor a chromium compound have been proposed.

For example, JP-A-5-195244 proposes a surface treating technique for metals with a composition containing (a) an anionic component containing at least four fluorine atoms and at least one element of titanium, zirconium and the like (for example, fluorotitanic acid represented by TiF₆²⁻), (b) a cationic component, such as cobalt, magnesium and the like, (c) a free acid for adjusting pH, and (d) an organic resin, but not containing chromium. In thisapplication,hereinafter, the fact that neither chromium nor a chromium compound is contained is referred to as "chromium free".

JP-A-11-350157 proposes a chromium free surface treatment composition for metals containing (a) a phosphoric compound of Al, (b) one kind or two or more kinds of Mn, Mg, Ca and Sr compounds, and (c) SiO₂ and an aqueous organic resin emulsion.

JP-A-11-50010 proposes a chromium free surface treatment composition for metals containing (a) a resin having a polyhydroxyether segment and a copolymer segment of an unsaturated monomer, (b) phosphoric acid, and (c) a phosphate of a metal, such as calcium, cobalt, iron, manganese, zinc or the like.

JP-A-2000-199077 proposes a surface treating solution for metals that is characterized by containing (a) at least one kind of metallic acetylacenate selected from the group consisting of Al(C₅H₇O₂)₃, V(C₅H₇O₂)₃, VO(C₅H₇O₂)₂, Zn(C₅H₇O₂)₂ and Zr(C₅H₇O₂)₂ and (b) at least one compound selected from a water soluble inorganic titanium compound and a water soluble inorganic zirconium compound.

According to theses four conventional techniques, decent corrosion resistance can be obtained in the case where the surface treating agent (a covering agent and a coating agent) is coated on a metal plate in a sufficient coated amount, i.e., in the case where a film having a sufficient thickness is coated. However, the corrosion resistance becomes significantly insufficient in the case where such a film is coated that a part of a metallic plate, such as a protruded part, is exposed, and the film thickness is too small. In other words, corrosion resistance is exerted only in the case where the coverage of the surface treating agent on the metallic plate is 100%, but the corrosion resistance becomes insufficient in the case where the coverage is less than 100%. Separately, since the surface treating agents contain no electroconductive substance, it suffers such a disadvantage that the electroconductivity is lowered when they are thickly coated over the surface. In the case where the thickness of the film is lowered to improve the electroconductivity, another problem arises that the corrosion resistance is deteriorated.

JP-A-2001-164182 proposes a method of coating an aqueous antirust coating agent containing (a) a thiocarbonyl group-containing compound, (b) a phosphate ion, and (c) aqueous dispersible silica and a hydrolytic condensation product, on a zinc coated steel. A sulfide, such as the thiocarbonyl group-containing compound used in this method, has such a nature that is liable to be adsorbed on a metallic surface, such as zinc or the like, and furthermore, a thiocarbonyl group exerts an antirust effect through adsorption on sites on the active zinc surface upon coating by the synergistic effect with the phosphate ion. A zinc series plated steel sheet obtained by the surface treatment method has high corrosion resistance through coating of a layer containing -NCS and -OCS groups on the surface, but there is a problem since the layer has no electroconductivity. In the case where the thickness of the film is reduced to ensure electroconductivity, a part that is not coated with the thiocarbonyl group-containing compound is exposed to cause rust. That is, both corrosion resistance and electroconductivity cannot be simultaneously realized by the method.

Furthermore, all the five conventional techniques are developed based on the concept that a metallic surface and a film formed with a surface treating agent are firmly fixed at the interface therebetween. The metallic surface and the surface treating agent cannot be completely adhered in a microscopic view, and thus, there is a limit in improving the adhesiveness. In the conventional techniques, therefore, what is important for improving corrosion resistance is improvement of denseness of the film of the surface treating agent but not adhesiveness. However, such a point is not considered in the conventional techniques using no chromium discussed above.

An object of the invention is to provide a chromium free surface-treated zinc series plated steel sheet that has excellent corrosion resistance, electroconductivity and formability equivalent to a general-purpose chromate-treated zinc series plated steel sheet, and to a process for producing the same. In particular, it aims, with respect to corrosion resistance, to satisfy both corrosion resistance of a flat plate part and corrosion resistance after forming. According to the process of the invention, neither chromium nor chromium compound is used, and no special wastewater treatment is necessary in a coating process of a surface treating solution and upon using the surface-treated steel sheet thus obtained.

### DISCLOSURE OF THE INVENTION

The invention is a surface-treated zinc series plated steel sheet containing a steel sheet having on a surface thereof a zinc series plated layer, and on the plated layer, a surface-treated film containing a reaction product of a metallic salt with the plated metal, and a resin in a mass proportion of from 1 to 50% by mass with respect to the metallic salt, wherein the surface-treated film has a layer mainly containing the reaction product having a thickness of from 0.02 to 3 µm, and the layer mainly containing the reaction product contains 20% by volume or more of the resin contained in the surface-treated film. It is preferred in the surface-treated zinc series plated steel sheet that the surface-treated film further contains a lubricating agent.

It is also preferred in the above-described surface-treated zinc series plated steel sheets that the metallic salt is at least one kind selected from the group consisting of a phosphate, a nitrate, a carbonate, a sulfate, an acetate and a hydroxide of at least one metal selected from the group consisting of Al, Mn, Mg, V and Zn.

The application is also to provide a process for producing a surface-treated zinc series plated steel sheet containing a step of treating a zinc series plated steel sheet with a treating solution containing a metallic salt and a resin in a mass proportion of from 1 to 50% by mass with respect to the metallic salt, and having a pH of from 1 to 4 and a free acidity of 3 to 20 in terms of 0.1N sodium hydroxide, so as to adhere a solid matter of from 0.05 to 3.0 g/m² in terms of an amount of the metallic salt. It is preferred in the production process that the treating solution contains a lubricating agent.

It is also preferred in the above-described production processes that the metallic salt is at least one kind selected from the group consisting of a phosphate, a nitrate, a carbonate, a sulfate, an acetate and a hydroxide of at least one metal selected from the group consisting of Al, Mn, Mg, V and Zn.

The aforementioned production processes preferably contain a step of coating the surface treating solution on a surface of the zinc series plated steel sheet, and a step of drying the coating by heating.

### BRIEF DESCRIPTION OF THE DRAWINGS

Fig. 1 is a graph showing a compositional distribution by GDS of a surface-treated zinc series plated steel sheet of the invention.
Fig. 2 is a diagram showing a method for obtaining a proportion of a resin in an intermediate layer.
Fig. 3 is a graph showing compositional distributions by GDS of layers of a comparative material.

### BEST MODE FOR CARRYING OUT THE INVENTION

As a result of earnest investigations made by the inventors with respect to means for attaining the objects, it has been found that a surface treating solution containing a resin and a metallic salt is coated on a surface of a zinc series plated steel sheet with no chromate coated, whereby such a coating can be formed that is particularly excellent in corrosion resistance and electroconductivity and also is excellent in press formability and corrosion resistance after forming, and thus the invention has been completed.

The surface-treated zinc series plated steel sheet according to the invention will be described in detail below.

A zinc series plated steel sheet to be subjected to the surface treatment according to the invention is a steel sheet having a plating containing zinc, and is not particularly limited. For example, it includes a zinc electroplated steel sheet, a zinc-nickel electroplated steel sheet, a hot-dip galvanized steel sheet, a zinc-aluminum plated steel sheet and the like.

The surface-treated zinc series plated steel sheet according to the invention has, on the surface of the plated layer of the zinc series plated steel sheet, a surface-treated film containing a reaction product of a metallic salt with the zinc series plated metal, and a resin.

The "metallic salt" in the invention is defined as a metallic salt of an acid and a metallic hydroxide. The most of the metallic salts has electroconductivity.

The surface-treated film mainly contains a reaction product of the plated metal on the surface part of the zinc series plated layer coated on the surface of the steel sheet with the metallic salt, and the reaction product forms a firm adhered state with the zinc series plated layer with a strong ionic bond, i.e., a bond between a dissociated ion of the metallic salt and a metallic ion in the plated layer, whereby as a result, excellent corrosion resistance is exerted.

In order to attain the firm adhered state, the layer mainly containing the reaction product necessarily has a thickness of from 0.02 to 3 µm as the surface-treated film. That is, in the case where the thickness of the layer is less than 0.02 µm, the bond between the zinc plated layer and the surface-treated film becomes insufficient to deteriorate the corrosion resistance. In the case where it exceeds 3 µm, on the other hand, the layer mainly containing the reaction product is liable to be released upon forming, such as bending or the like, to deteriorate the adhesiveness of the surface-treated film, whereby the press formability is deteriorated. In particular, the appearance after forming is deteriorated.

The layer mainly containing the reaction product of the metallic salt with the plated metal (hereinafter, sometimes simply referred to as a "plated metal") is formed by penetrating the dissociated ion of the metallic salt from the surface of the plated layer into the interior thereof to react with the platedmetal, and therefore, the thickness thereof is equivalent to such a depth that the dissociated ion of the metallic salt is penetrated from the surface of the plated layer (i.e., the surface of the plated layer before forming the layer containing the reaction product) into the interior of the plated layer. Accordingly, the thickness of the layer containing the reaction product can be measured by analysis of the metallic salt component in the depth direction, for example, by the glow discharge spectroscopy (hereinafter, sometimes abbreviated as GDS) and the like.

It is preferred to use, as the metallic salt, at least one kind selected from the group consisting of a phosphate, a nitrate, a carbonate, a sulfate, an acetate and a hydroxide of at least one metal selected from the group consisting of Al, Mn, Mg, V and Zn. More preferably, an inorganic acid salt of metal of Mg, Mn or V and an inorganic acid salt of zinc are used in combination, or a hydroxide of Mg, Mn or V and a hydroxide of zinc are used in combination.

The surface-treated film is also characterized by containing a resin in addition to the reaction product of the metallic salt with the zinc series plated metal. It is necessary that the resin herein does not form a layer completely separated from the layer mainly containing the reaction product of the metallic salt with the plated metal, but the prescribed amount of the resin is present in the layer mainly containing the reaction product. Owing to the fact that the resin is present in the layer having the metallic salt and the plated metal firmly bonded through reaction, the adhesiveness between the resin and the reaction product layer becomes firm to prevent the surface-treated layer from being released after forming the steel sheet, whereby good appearance after forming is obtained. The plated metal includes the compositional elements of the steel sheet diffused into the plated layer through a heat treatment or the like.

That is, in the surface-treated film according to the invention, the reaction product of the metallic salt with the plated metal and the resin are not accumulated to form a clear boundary, but the resin is present in the layer mainly containing the reaction product of the metallic salt with the plated metal to form such a concentration distribution in that the concentration of the resin is gradually increased in the thickness direction of the layer. In other words, there is such a state that the resin coexists with the reaction product of the metallic salt with the zinc series plated metal with the proportion thereof gradually increasing from the side of the plated layer.

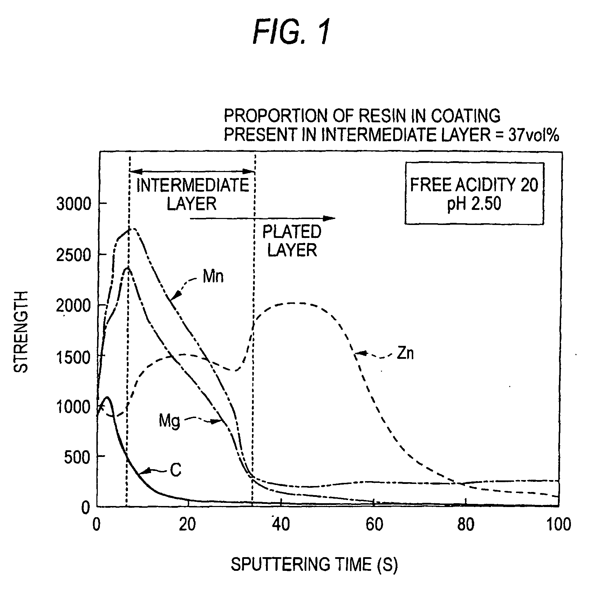

Fig. 1 shows an example where the surface-treated zinc series plated steel sheet of the invention is subjected to analysis of the metallic components (Mg and Mn) of the metallic salt, the resin component (C) and the plated metal (Zn) from the surface in the depth direction by using GDS to measure the signal intensities (existing amounts) of the respective elements in the depth direction. The surface-treated steel sheet is formed by in such a manner that a surface treating solution formed by mixing phosphate salts of Mg and Mn with a resin (polyethylene resin emulsion) at a ratio resin/metallic salt of 0.1 is coated on a zinc electroplated steel sheet, followed by drying, to form the surface-treated film. The analysis was conducted by using RF-GDS3860, produced by Rigaku Corp., under conditions of an anode diameter of 4 mm, 20 W, and an Ar gas flow rate of 300 cc/min. The sputtering time and the depth can be related to each other based on the sputtering rate in terms of iron from Fig.1, and the thickness of the layer mainly containing the reaction product of the metallic salt with the plated metal (hereinafter, sometimes referred to as an "intermediate layer") can be obtained.

In Fig. 1, the time where the sputtering time is 0 second designates the outermost surface of the surface-treated zinc series plated steel sheet of the invention. It is understood that the metallic components (Mg and Mn) of the metallic salt coexist with the plated metal (Zn) in a depth region where the sputtering time is about 35 seconds or less. In the depth region, the peak of the carbon component (C) of the resin is present on the surface side with respect to the peaks of the metallic components of the metallic salt (hereinafter, sometimes simply referred to as metallic salt components), but it coexists with the metallic salt components (Mg and Mn). As having been mentioned, such a layer is formed in that the reaction product of the metallic salt with the plated metal coexists with the resin.

As regarding the peak of the metal having the maximum peak among the peaks of the metallic salt components in the measurement results of the signal intensities (existing amounts) of the elements (for example, Fig. 1), the layer (intermediate layer) mainly containing the reaction product in the invention is defined as a range of from the position of the maximum value thereof to the position toward the plated layer where the intensity of the maximum peak becomes 1/10.

The inventors have obtained such a finding that in the case where a surface treating solution containing a resin and a metallic salt is applied to a zinc series plated steel sheet to form a surface-treated film, the formability, the appearance after forming and the corrosion resistance after forming of the steel sheet are improved by increasing the proportion of the resin present in the layer (intermediate layer) containing the reaction product of the metallic salt and the plated metal among the resin adhered. Accordingly, the states of presence of the resin and the intermediate layer are evaluated in the following manner as a factor capable of improving these characteristics.

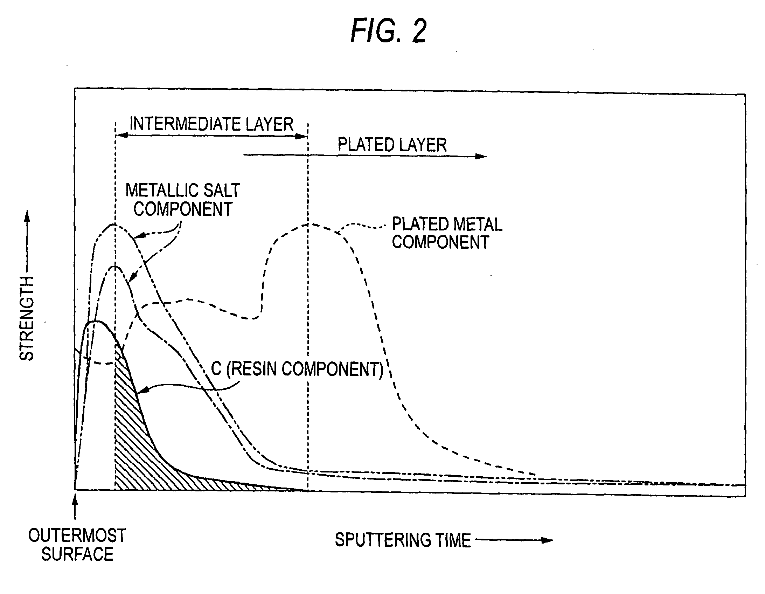

Fig. 2 schematically shows a GDS analysis chart in the depth direction of the metallic salt component, the resin component and the plated metallic salt component.
The total amount of the resin can be digitalized by obtaining the total peak area of the carbon intensity (C) on the chart. Similarly, the amount of the resin contained in the intermediate layer can be digitalized by obtaining the carbon amount on the intermediate layer side, i.e., on the side of the plated layer with respect to the maximum peak of the metallic salt component, from the area on the chart (the area of the hatched area in Fig. 2). Accordingly, the proportion of the resin in the intermediate layer can be expressed as a volume proportion occupied in the total resin. It is found from investigations on influence of the proportion on the appearance after forming that in the case where the proportion of the resin in the intermediate layer is 20% by volume or more, such a surface-treated zinc series plated steel sheet can be obtained that is significantly excellent in appearance after forming without release of the surface-treated film after forming. Therefore, it is necessary in the invention that 20% by volume or more of the resin in the surface-treated film is contained in the intermediate layer.

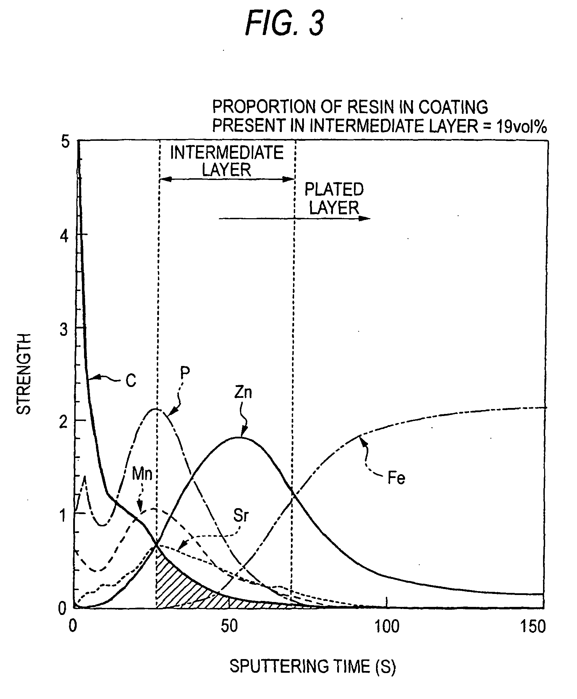

Fig. 3 shows an example where the proportion of the resin in the surface-treated film contained in the intermediate layer is less than 20% by volume. That is, in the intermediate layer having the same meaning as in the foregoing, the proportion of the resin is less than 20% by volume, and the surface-treated film having the constitution is particularly poor in appearance after forming, and is also disadvantageous in blocking resistance described later. As the metallic salts of the surface-treated film in Fig. 3, phosphate salts of Mn and Sr are used.

In the invention, furthermore, the mass ratio of the resin and the metallic salt in the surface-treated film, i.e., resin/metallic salt, is necessarily from 0.01 to 0.5. That is, it is necessary that the mass proportion of the resin with respect to the metallic salt is from 1 to 50% by mass. In the case where the mass proportion exceeds 50% by mass, it is liable that releasing occurs upon press forming to form black foreign matters, which deteriorate the appearance after forming, and a problem of decreased electroconductivity also occurs, although there is a tendency that the corrosion resistance is improved. In the case where the mass proportion is less than 1% by mass, on the other hand, the lubricating property is significantly impaired, whereby black foreign matters are formed, and gallings are liable to occur by the forming, upon press forming. Therefore, the mass proportion of the resin with respect to the metallic salt in the surface-treated film is from 1 to 50% by mass.

The mass proportion of the resin with respect to the metallic salt in the surface-treated film can be measured with a fluorescent X-ray.

The resin is preferably that containing at least one kind selected from the group consisting of a polymer of a carboxyl group-containing monomer, a polymer of a carboxyl group-containing monomer and another polymerizable monomer, a copolymer of a hydroxyl group-containing monomer and a carboxyl group-containing monomer, and a copolymer of a hydroxyl group-containing monomer, a carboxyl group-containing monomer and a phosphoric acid-containing monomer, and is preferably that containing a water dispersible resin.

Examples of the carboxyl group-containing monomer include an ethylenic unsaturated carboxylic acid and a derivative thereof. Examples of the ethylenic unsaturated carboxylic acid include amonocarboxylic acid, such as acrylic acid, methacrylic acid, crotonic acid and the like, and a dicarboxylic acid, such as itaconic acid, maleic acid, fumaric acid and the like. Representative examples of the derivative include an alkali metallic salt, an ammonium salt, an organic amine salt and the like. Preferred examples thereof include acrylic acid and methacrylic acid.

Examples of the hydroxyl group-containing monomer include a monomer having a reductive hydroxyl group, such as a (meth)acrylic acid hydroxyl ester, such as hydroxyethyl (meth) acrylate, hydroxypropyl (meth) acrylate, 3-hydroxybutyl (meth)acrylate, 2,2-bis(hydroxymethyl)ethyl acrylate, 2,3-dihydroxypropyl (meth)acrylate, 3-chloro-2-hydroxypropyl (meth) acrylate and the like, an allyl alcohol compound, and a hydroxyl group-containing acrylamide compound, such as N-methylolacrylamide, N--butoxymethylol(meth)acrylamide and the like. Preferred examples thereof include hydroxyethyl acrylate and hydroxyethyl methacrylate.

A water soluble copolymer containing a hydroxyl group-containing monomer and a carboxyl group-containing monomermay befurthercopolymerized with anotherpolymerizable monomer within such a range that the characteristics of the organic resin layer expected in the invention are maintained. Preferred examples of the monomer include a styrene compound and a (meth)acrylate compound, such as methyl methacrylate.

The phosphoric acid-containing compound is a compound having a phosphoric acid residual group and an addition polymerizable group represented by compound having an ethylenic unsaturated group, and specific examples thereof include a phosphate ester of 2-hydroxyethyl methacrylate, a phosphate ester of penta (propyleneoxide) ester of methacrylic acid, and the like.

The resin can be improved in formability and corrosion resistance after forming by further adding the water dispersible resin. In particular, a water dispersible resin excellent in low pH (characteristics where it is stable in an acidic aqueous solution (pH of from 1 to 4) and uniformly dispersible therein) is preferred. This is because a treating solution having a low pH is necessarily used upon forming the surface-treated film as described later. Examples thereof include that obtained by copolymerizing an unsaturated monomer other than a monomer containing a carboxyl group or a hydroxyl group with a monomer containing a carboxyl group. Preferred examples of the former monomer include styrene and an alkyl ester of methacrylic acid, such as butyl methacrylate, methyl methacrylate and the like. As the water dispersible resin, such a resin can also be used that is stable in an acidic aqueous solution (pH of from 1 to 4) and uniformly dispersible therein. Examples thereof include a polyester series, an acrylic series and a urethane series, which have been conventionally used for the surface treatment of a metallic material. These may be used in combination of two or more kinds thereof.

The amount of the water dispersible resin is preferably from 1 to 25% by mass in terms of a mass proportion with respect to the metallic salt. The amount is that after drying the film. In the case where the amount exceeds 25% by mass, it is liable to form black foreign matters upon press forming, and problems of decreased electroconductivity and deterioration in film drying property also occur, although there is a tendency that the corrosion resistance is improved, and therefore, it is preferably 25% by mass or less. It is preferably 10% by mass or less. In the case where the amount is less than 1% by mass, on the other hand, the lubricating property is significantly impaired, whereby black foreign matters are formed, and gallings are liable to occur by the forming, upon press forming, and therefore, it is preferably 1% by mass or more. It is more preferably 2% by mass or more.

The resin layer may contain a lubricating agent to expect improvement of the press formability. The amount of the lubricating agent is preferably from 0.1 to 25% by mass in terms of mass proportion with respect to the metallic salt. The amount is that after drying the film. In the case where the amount is 0.1% by mass or more, the press formability is improved with good lubricating property, and therefore, it is preferably 0.1% by mass or more. In the case where the amount is 25% by mass or less, a good appearance is obtained upon press forming, and therefore, it is preferably 25% by mass or less. It is more preferably 10% by mass or less. The lubricating agent is preferably that has low pH stability and has a softening point of 100°C or more. Polyethylene wax and fluorine wax can be preferably used as the lubricating agent.

Furthermore, the layer containing the reaction product of the plated metal with the metallic salt, i.e., the intermediate layer, has sufficient durability when it has continuity. Those having continuity are also preferred since the press formability and the corrosion resistance after forming are improved.

The term "having continuity" herein means that the intermediate layer of the treated film has no defective part to form no exposed area of the zinc plating.

The process for producing the surface-treated zinc series plated steel sheet according to the invention will be described in detail.

The surface-treated film according to the invention is formed by attaching the surface treating solution containing the metallic salt and the resin on a plated surface of a steel sheet.

Accordingly, the application provides an invention relating to such a process for producing a surface-treated zinc series plated steel sheet in that a zinc series plated steel sheet is treated with a treating solution containing a metallic salt and a resin in an amount of from 1 to 50% by mass in terms of mass proportion with respect to the metallic salt, having pH of from 1 to 4, and having a free acidity of from 3 to 20 in terms of 0.1N sodium hydroxide, so as to adhere a solid matter of from 0.05 to 3.0 g/m² in terms of an amount of the metallic salt.

The solid matter contains the reaction product of the metallic salt with the plated metal, the resin and a residue in the treating solution. In the application, the adhered amount of the solid matter is from 0.05 to 3.0 g/m² in terms of a content of the metallic salt.

It is important that the surface treating solution used herein contains the metallic salt and the resin in an amount of from 1 to 50% by mass in terms of mass proportion with respect to the metallic salt, having pH of from 1 to 4, and having a free acidity of from 3 to 20 in terms of 0.1N sodium hydroxide.

### (Resin/metallic salt: 1 to 50%)

The reason why the mass proportion of the resin with respect to the metallic salt in the surface treating solution is from 1 to 50% by mass is that in the case where it exceeds 50% by mass, it is liable to form black foreign matters upon press forming, and problems of decreased electroconductivity and deterioration in film drying property also occur, although there is a tendency that the corrosion resistance is improved, and therefore, it is preferably 50% by mass or less. In the case where the amount is less than 1% by mass, on the other hand, the lubricating property is significantly impaired, whereby black foreign matters are formed, and gallings are liable to occur by the forming, upon press forming, and therefore, it is preferably 1% by mass or more. It is more preferably 3% by mass or more.

### (pH: 1 to 4)

In the case where the pH of the surface treating solution is less than 1, there are some cases where the zinc series plated layer is dissolved to cause thinning of the plated layer and re-dissolution of the reaction product of the plated metal with the metallic salt, so that improvement of the corrosion resistance can not be obtained, and therefore, the pH is restricted to a range of 1 or more. In the case where the pH exceeds 4, on the other hand, the reaction product of the plated metal with the metallic salt is not formed, and the corrosion resistance is significantly deteriorated. Therefore, the pH of the treating solution is from 1 to 4. Accordingly, the water dispersible resin in the treating solution is preferably those excellent in low pH stability.

For example, in order that the treating solution obtained by dissolving the phosphoric acid series acid or the like in water is adjusted to have pH of from 1 to 4, it is neutralized with a hydroxide, such as NaOH and KOH, an amine or the like.

### (Free acidity: from 3 to 20 in terms of 0.1N sodium hydroxide)

The "free acidity in terms of 0.1N sodium hydroxide" referred in the invention is an amount (mL) of a 0.1N sodium hydroxide aqueous solution that is required to change a yellow color of 10 mL of the treating solution added with three droplets of bromophenol blue to a blue color, and is expressed by an absolute number.

As having been described, even though the pH of the surface treating solution is adjusted to a range of from 1 to 4, the corrosion resistance is lowered when the free acidity in terms of 0.1N sodium hydroxide is outside the range of from 3 to 20. That is, in the case where the free acidity is less than 3, the thickness of the intermediate layer is too small, and the intermediate layer cannot contain 20% by volume or more of the resin in the film. In the case where the free acidity exceeds 20, on the other hand, the continuity of the intermediate layer is impaired. Therefore, the free acidity in terms of 0.1N sodium hydroxide of the treating solution is from 3 to 20. It is preferably from 5 to 15. In the case of the same pH, the use of pyrophosphoric acid is effective for decreasing the free acidity.

The surface treating solution contains at least one kind selected from the group consisting of a phosphate, a nitrate, a carbonate, a sulfate, an acetate and a hydroxide of at least one metal selected from the group consisting of Al, Mn, Mg, V and Zn, a water dispersible resin, and more preferably contains a lubricating agent. The treating solution can be obtained by adding the metallic salt, the resin, preferably the water dispersible resin, and more preferably the lubricating agent to water to form an aqueous solution.

The metallic phosphate may be any salt that is formed by reaction of a phosphorous-containing acid forming phosphoric acid in the treating process, with the metal. Examples of the phosphorous-containing acid include, in addition to phosphoric acid, polyphosphoric acid, hypophosphorous acid, pyrophosphoric acid, tripolyphosphoric acid, hexametaphosphoric acid, primary phosphoric acid, secondary phosphoric acid, tertiary phosphoric acid and the like.

The metallic salt in the treating solution is reacted with a metal in the plated layer upon contacting the treating solution with the plated layer, whereby a firm bond is formed to produce a thin layer excellent in corrosion resistance (i.e., the intermediate layer). It is expected that the reason why such a firm bond is formed is that the metallic salt is dissociated prevailing over the other components (such as the resin or the like) in the treating solution, and the dissociated ion forms an ionic bond with a metallic ion in the plated layer. The concentration of the metallic salt in the treating solution may be appropriately adjusted within such a range in that the metallic salt is dissolved.

What is preferred herein is the case where inorganic acid salts of at least one metal selected from the group consisting of Mg, Mn and V are used in combination. It is more preferred that an inorganic acid salt of Zn is further used in combination.

The water dispersible resin and the lubricating agent in the treating solution are dispersed in the treating solution, and are similarly contained by dispersing in the intermediate layer formed by contacting the treating solution with the plated layer. The inclusion of the water dispersible resin ensures uniform lubricating property in any part in the depth direction of the intermediate layer. The inclusion of the lubricating agent attains a sufficient level of lubricating property. The press formability and the corrosion resistance after forming are ensured by the functions thereof. Therefore, it is preferred that the water dispersible resin and the lubricating agent are mixed with the resin.

In order to exhibit the functions in a sufficient manner, it is necessary that the content of the resin (and preferably the lubricating agent) in the treating solution is from 1 to 50% by mass in terms of mass proportion with respect to the metallic salt. The requirements are the same as those in the surface treating solution, and therefore, the object of the invention cannot be attained when the requirements in the treating solution are not satisfied because of the aforementioned reasons.

The resin mixed in the treating solution preferably contains at least one kind selected from the group consisting of a polymer of a carboxyl group-containing monomer, a copolymer of the carboxyl group-containing monomer and another polymerizable monomer, a copolymer of a hydroxyl group-containing monomer and the carboxyl group-containing monomer, and a copolymer of a hydroxyl group-containing monomer, a carboxyl group-containing monomer and a phosphoric acid-containing monomer. Furthermore, it is preferred that the water dispersible resin and/or the lubricating agent are contained.

The concentrations of the resins may be appropriately adjusted within ranges where the stability thereof is ensured.

In the case where the water dispersible resin is contained, when the glass transition point of the water dispersible resin is 20°C or more, excellent blocking resistance of the film can be obtained after drying. When it is 120°C or less, on the other hand, the film well follows deformation of the steel sheet upon forming to prevent breakage of film, and thus the corrosion resistance after forming is improved. Therefore, the water dispersible resin preferably has a glass transition point of from 20 to 120°C.

When the particle diameter of the resin is 0.1 µm or more, the press formability is improved. When it is 2.0 µm or less, on the other hand, the continuity of the intermediate layer is well maintained, and thus all the corrosion resistance, the press formability and the corrosion resistance after forming are improved. Therefore, the resin preferably has a particle diameter of from 0.1 to 2.0 µm.

The surface treating solution used in the invention may contain a surface active agent from the standpoint of prevention of foaming and stability of the treating solution upon applying to the surface to be treated (i.e., the surface of the zinc series plated steel sheet). The surface active agent may be those stable under conditions where pH is from 1 to 4, and examples thereof include a nonionic surface active agent. In order to impart other functions, wax and various kinds of additives that are used on the ordinary surface treatment may be added to the treating solution.

The method for applying the surface treating solution to the surface to be treated preferably contains a coating step of contacting the surface to be treated with the treating solution, and a drying step of drying the part thus contacted by heating to 50 to 100°C. In the coating step, such a coating method is preferably employed, as roll coating, spray coating, brush coating, curtain flow coating and the like. The coated amount and the attached amount are set in such a manner that the aforementioned thickness of the intermediate layer is realized. In the case where the attached amount is from 0.05 to 3.0 g/m² in terms of the amount of the metallic salt, the thickness of the intermediate layer can be from 0.02 to 3 µm. In the case where the heating temperature (the temperature of the steel sheet) in the drying step is 50°C or more, water is difficult to remain in the film, whereby the corrosion resistance is improved. In the case where it is 100°C or less, on the other hand, conversion of phosphoric acid to an ortho form is suppressed to maintain the free acidity of the solution, whereby the corrosion resistance is improved. Accordingly, the temperature is preferably in a range of from 50 to 100°C. The heating means may be an air heating furnace, a dryer, a high-frequency heating furnace, an infrared ray heating furnace and the like.

According to the application method of the treating solution, such a surface-treated zinc series plated steel sheet that has corrosion resistance, electroconductivity and press formability equivalent to a general-purpose chromate-treated steel sheet and is excellent in corrosion resistance after forming can be obtained with high efficiency and low cost without the use of chromate.

### EXAMPLES

### EXAMPLE 1

As shown in Table 1, aqueous surface treating solutions containing metallic salts and the resins A to E or the water dispersible resins F to I were spray-coated on the following zinc series plated steel sheets a to f and painted with a wringer. Thereafter, the steel sheet was heated to a temperature of 60°C over 5 seconds to form a surface-treated film. The conditions of the treating solutions and the properties of the films thus obtained are also shown in Table 1.

### (Zinc series plated steel sheets a to f)

Steel sheet a: zinc electroplated steel sheet (thickness: 1 mm, Zn 20 g/m²)
Steel sheet b: zinc-nickel electroplated steel sheet (thickness: 1 mm; Zn-Ni 20 g/m², Ni: 12% by mass)
Steel sheet c: hot-dip galvanized steel sheet (thickness: 1 mm, Zn 60 g/m²)
Steel sheet d: galvanized steel sheet (thickness: 1 mm, Zn 60 g/m², Fe: 10% by mass)
Steel sheet e: zinc-aluminum plated steel sheet (thickness: 1 mm, 60 g/m², Al: 5% by mass)
Steel sheet f: zinc-aluminum plated steel sheet (thickness: 1 mm, 60 g/m², Al: 55% by mass)

### (Resins A to I)

The proportions in the resins A to D are polymerization ratios of the copolymers.
Resin A: acrylic acid/maleic acid = 90/10 (molecular weight: 20,000)
Resin B: acrylic acid/itaconic acid = 70/30 (molecular weight: 50,000)
Resin C: methacrylic acid/maleic acid = 80/20 (molecular weight: 25,000)
Resin D: methacrylic acid/itaconic acid = 60/40 (molecular weight: 25,000)
Resin E: phosphoric acid-modified acrylic resin
Resin F: epoxy-modified urethane resin (molecular weight: 25,000)
Resin G: urethane resin emulsion
Resin H: acrylic resin emulsion
Resin I: polyethylene resin emulsion

Test pieces thus obtained were measured for mass proportion (% by mass) of the resin with respect to the metallic salt in the surface-treated film through analysis with a fluorescent X-ray. The volume proportion (% by volume) of the resin present in the intermediate layer out of a total of the resin in the surface-treated film was obtained by the aforementioned method using GDS (see Fig. 2). The thickness of the intermediate layer was also measured by using GDS. The uniformity of the surface-treated film was evaluated in the following manner.

### (Plate electroconductivity)

After the test piece was cut into a size of 175 x 100 mm, it was evaluated for an average value of surface resistance values of 10 points measured by using a four-terminal four-probe surface resistance meter ("Loresta AP", produced by Mitsubishi Chemical Corp.) by the following evaluation standard. The results obtained are shown in Table 2.
- AA:: less than 0.1 mΩ
- A:: 0.1 mΩ or more and less than 0.5 mΩ
- B:: 0.5 mΩ or more and less than 1.0 mΩ
- C :: 0.1 mΩ or more

### (Corrosion resistance of flat part)

After the test piece was cut into a size of 70 x 150 mm, an edge surface thereof was sealed, and it was subjected to a salt water spraying test JIS Z-2371. The time until white rust was formed on 5% of the area of the one surface of the test piece was evaluated by the following evaluation standard. The results obtained are shown in Table 2.
- AA:: 72 hours or more
- A:: 48 hours or more and less than 72 hours
- B:: 24 hours or more and less than 48 hours
- C:: less than 24 hours

### (formability)

Right and wrong of forming (A: right, C: wrong) and the forming load upon conducting press forming by using an Erichsen cup tester under the following conditions were evaluated. The results obtained are shown in Table 2.

Forming conditions:
punch diameter: 33 mm
blank diameter: 66 mm
shoulder curvature of draw die: 3 mmR
drawing rate: 60 mm/s
load of blank holder: 1 ton
quick-drying oil coated (1.5 g/m²)

Furthermore, as an evaluation of appearance after forming, the tendency to release the film after forming was evaluated. That is, after a cellophane adhesive tape was adhered on a side wall of the aforementioned formed article obtained by press forming using the Erichsen cup tester, it was peeled and attached to a Cu plate, the Zn count of which was measured with a fluorescent X-ray. It was evaluated with the counted value by the following standard. The results obtained are shown in Table 2.
- A:: 10 kcps or less
- B:: more than 10 kcps and 15 kcps or less
- C:: more than 15 kcps

### (Corrosion resistance after forming)

After forming into a cylinder under the aforementioned conditions, an edge surface thereof was sealed, and it was subjected to a salt water spraying test JIS Z-2371. The time until white rust was formed on 5% of the area of the one surface of the test piece was evaluated by the following evaluation standard. The results obtained are shown in Table 2.
- AA:: 12 hours or more
- A:: 6 hours or more and less than 12 hours
- B:: 3 hours or more and less than 63 hours
- C:: 3 hours or less

### EXAMPLE 2

As shown in Table 3, aqueous surface treating solutions containing metallic salts, the water dispersible resins J to M and the lubricating agents N to O were spray-coated on the zinc series plated steel sheets a to f used in Example 1, and the coated surface was smoothened with a wringer. Thereafter, the steel sheet was heated to a temperature of 60°C over 5 seconds to form a surface-treated film thereby to form test pieces. The conditions of the treating solutions and the properties of the films thus obtained are also shown in Table 3.

### (Water dispersible resin)

Resin J: urethane resin emulsion (Tg: 80°C, dispersed particle diameter: 0.2 to 0.4 µm)
   Tg represents a glass transition point (hereinafter, the same).
Resin K: acrylic resin emulsion (Tg: 70°C, dispersed particle diameter: 0.3 to 0.4 µm)
Resin L: polyethylene resin emulsion (Tg: 80°C, dispersed particle diameter: 0.1 to 0.2 µm)
Resin M: acrylic resin emulsion (Tg: 30°C, dispersed particle diameter: 0.1 to 0.2 µm)

### (Lubricating agent)

Lubricating agent N: polyethylene wax (softening temperature: 110°C)
Lubricating agent O: fluorine wax (softening temperature: 160°C)

The test pieces were measured for the mass proportion (% by mass) of the resin with respect to the metallic salt in the surface-treated film, the volume proportion (% by volume) of the resin in the film present in the intermediate layer, the thickness (µm) of the intermediate layer, and the uniformity of the surface-treated film in the same manner as in Example 1. The results obtained are shown in Table 1.

The test pieces were evaluated for the following characteristics (plate electroconductivity, corrosion resistance of flat part, formability (press formability) and corrosion resistance after processing) in the same test methods as in Example 1. The evaluation results are shown in Table 4.

According to Table 4, the invention examples result grade A or higher in all the evaluations, and thus are equivalent to or better than a chromate material. With respect to formability the forming load is 27 kN or less while that of a chromate material is 32 kN, and the appearance is of grade A. It is understood from the results that it is excellent in corrosion resistance, electroconductivity, formability and corrosion resistance after forming.

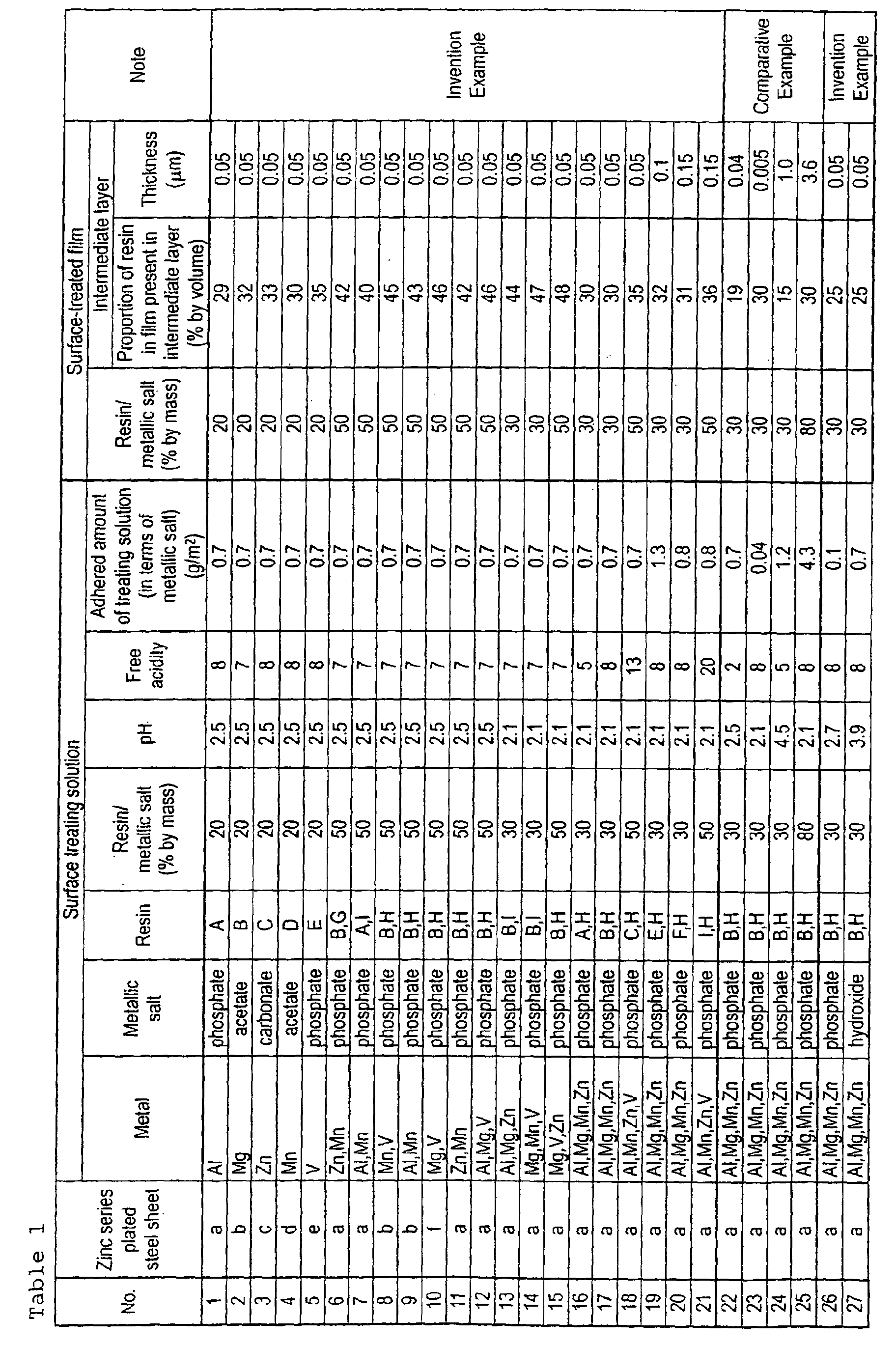

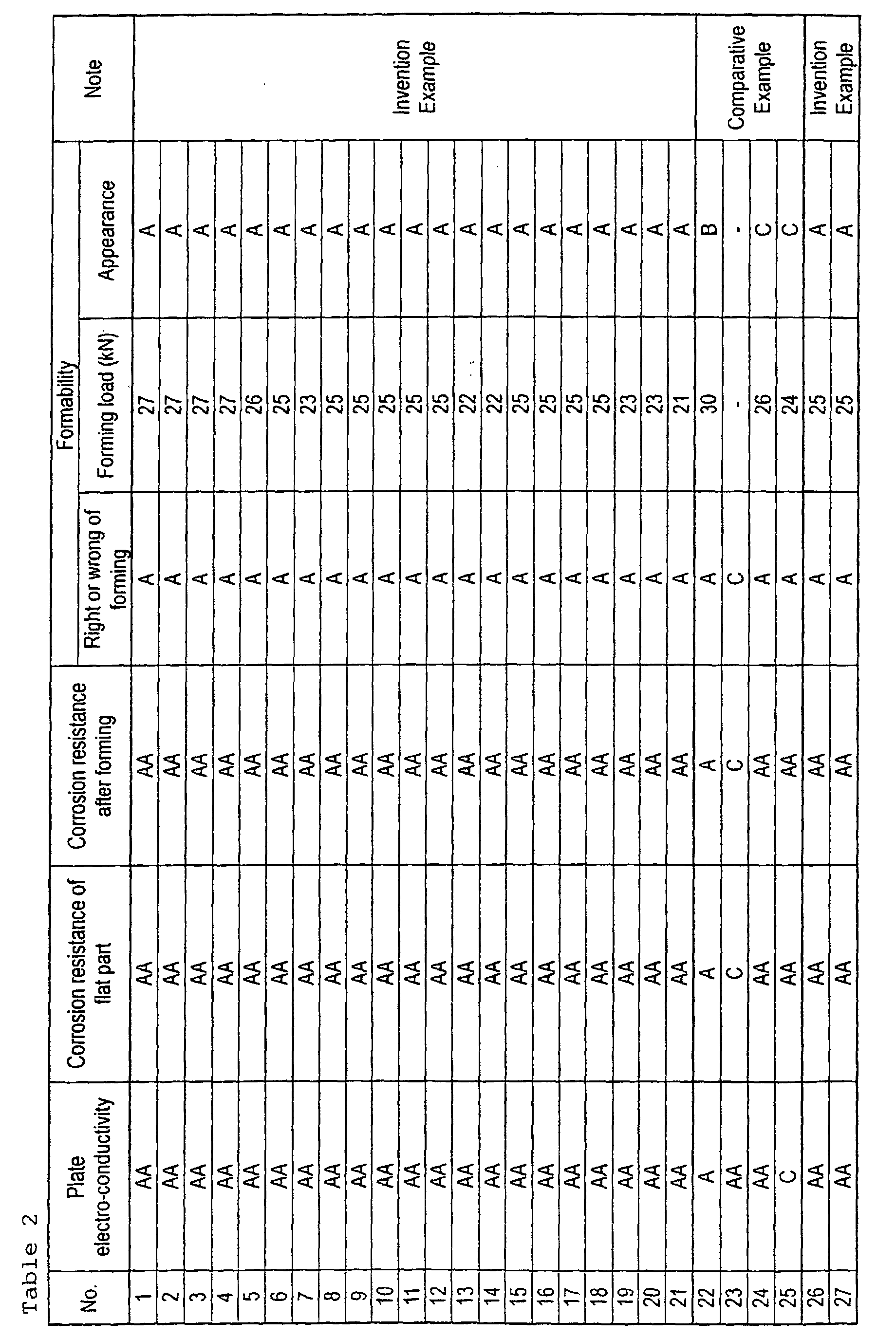

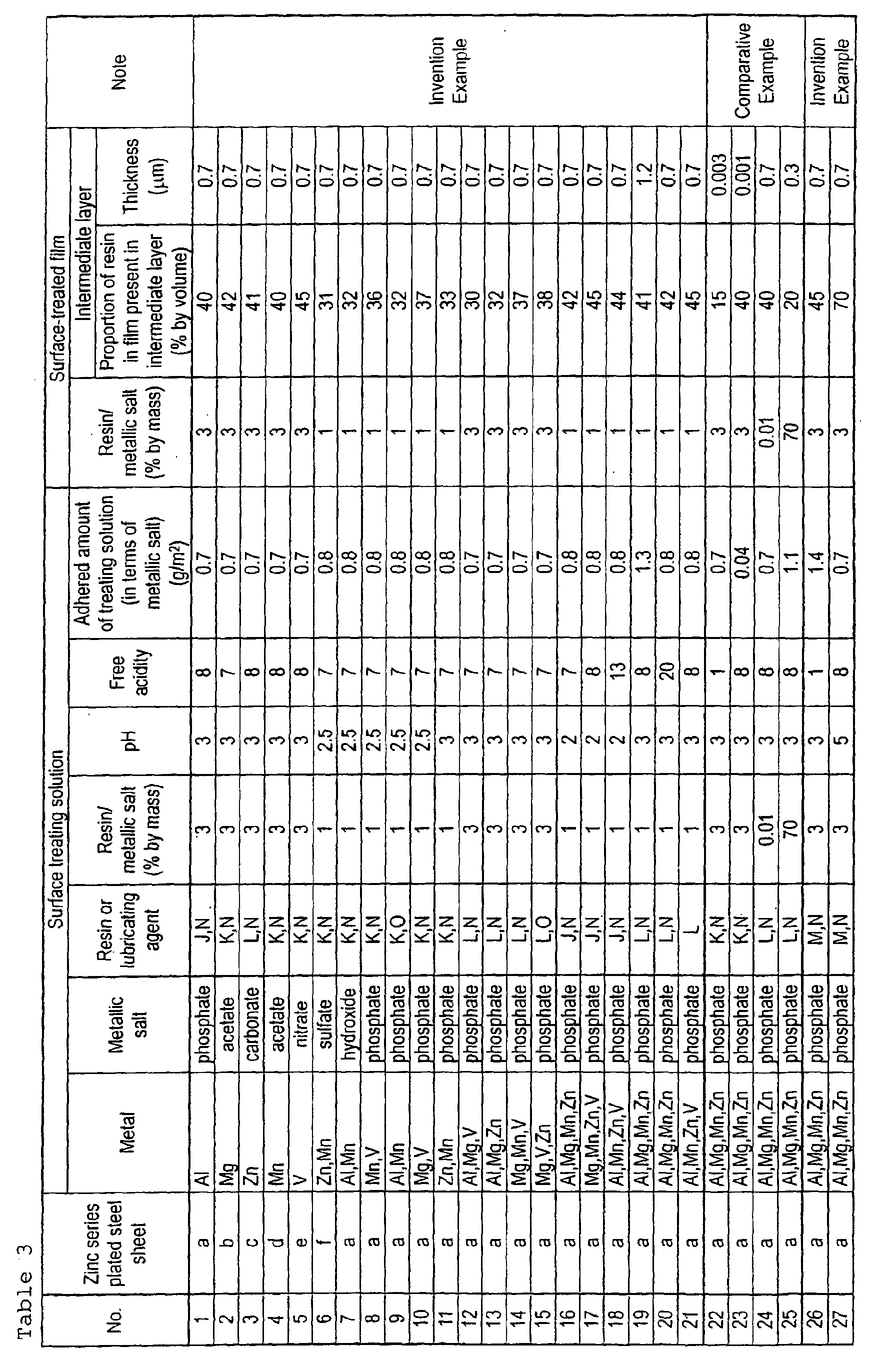

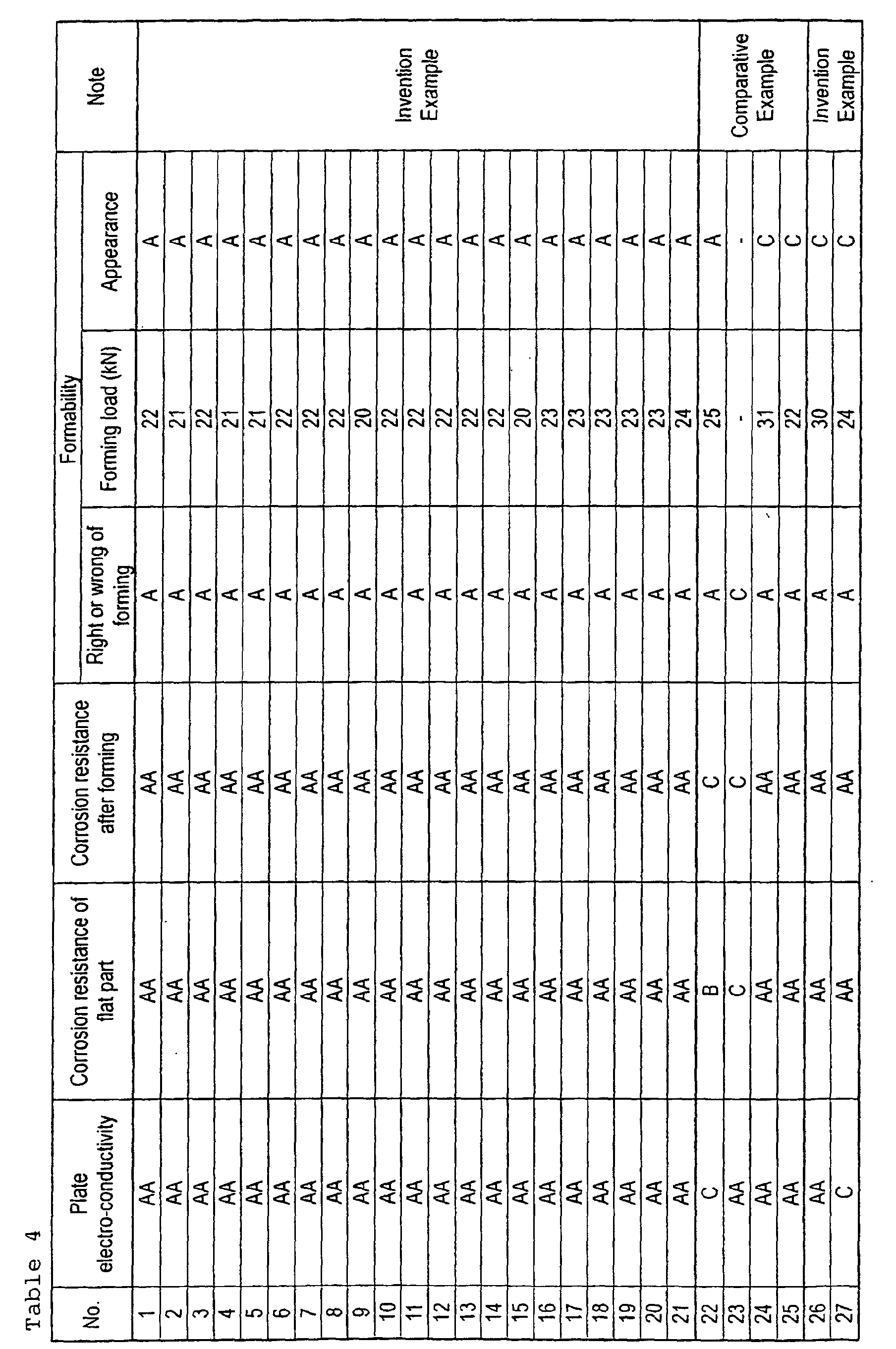

### INDUSTRIAL APPLICABILITY

According to the invention, such a chromium free surface-treated zinc series plated steel sheet is obtained that is excellent in corrosion resistance of flat part, corrosion resistance after forming, electroconductivity and formability, as equivalent to a general-purpose chromate-treated zinc series plated steel sheet. According to the process of the invention, neither chromium nor chromium compound is used, and no special wastewater treatment is necessary in a coating process of a surface treating solution and upon using the surface-treated steel sheet. Therefore, the invention can be utilized in a wide variety of fields instead of a conventional chromate-treated steel sheet, which is used in the fields of automobiles and home electric appliances, without a special attention to environmental pollution.

## Claims

1. A surface-treated zinc series plated steel sheet containing a steel sheet having on a surface thereof a zinc series plated layer, and on the plated layer, a surface-treated film containing a reaction product of a metallic salt with the plated metal, and a resin in a mass proportion of from 1 to 50% by mass with respect to the metallic salt, wherein the surface-treated film has a layer mainly containing the reaction product having a thickness of from 0.02 to 3 µm, and the layer mainly containing the reaction product contains 20% by volume or more of the resin contained in the surface-treated film.

2. A surface-treated zinc series plated steel sheet as described in claim 1, wherein the surface-treated film further contains a lubricating agent.

3. A surface-treated zinc series plated steel sheet as described in claim 1 or 2, wherein the metallic salt is at least one kind selected from the group consisting of a phosphate, a nitrate, a carbonate, a sulfate, an acetate and a hydroxide of at least one metal selected from the group consisting of Al, Mn, Mg, V and Zn.

4. A process for producing a surface-treated zinc series plated steel sheet containing a step of treating a zinc series plated steel sheet with a treating solution containing a metallic salt and a resin in a mass proportion of from 1 to 50% by mass with respect to the metallic salt, and having a pH of from 1 to 4 and a free acidity of 3 to 20 in terms of 0.1N sodium hydroxide, so as to adhere a solid matter of from 0.05 to 3.0 g/m² in terms of an amount of the metallic salt.

5. A process for producing a surface-treated zinc series plated steel sheet as claimed in claim 4, wherein the resin contains a lubricating agent.

6. A process for producing a surface-treated zinc series plated steel sheet as claimed in claim 4, wherein the metallic salt is at least one kind selected from the group consisting of a phosphate, a nitrate, a carbonate, a sulfate, an acetate and a hydroxide of at least one metal selected from the group consisting of Al, Mn, Mg, V and Zn.

7. A process for producing a surface-treated zinc series plated steel sheet as claimed in one of claims 4 to 6, wherein the process comprises a step of coating the treating solution on a surface of the zinc series plated steel sheet, and a step of drying the coating by heating.
